# EUROPEAN PATENT APPLICATION

(11) **EP 1 517 248 A2**
(43) Date of publication of application: **23.03.2005**
(21) Application number: 04255594.6
(22) Date of filing: 15.09.2004
(51) Int. Cl.: G06F 17/20, G06F 9/44

(54) **Information processing apparatus, its control method, and program**

(30) Priority: 17.09.2003 JP 2003324693
(71) Applicant: CANON KABUSHIKI KAISHA, Ohta-ku, Tokyo (JP)
(72) Inventor: Ito, Masato c/oCanon Kabushiki Kaisha, Tokyo (JP); Hirota, Makoto c/o Canon Kabushiki Kaisha, Tokyo (JP)
(74) Representative: Beresford, Keith Denis Lewis

(57) **Abstract**

A profile information parsing unit receives profile information which includes property information indicating the properties of a manipulation device, and user information associated with a user who manipulates the manipulation device. A source document selection unit selects a source document from a source document holding unit in accordance with the received profile information. A stylesheet generation unit generates transformation description components from a stylesheet holding unit in accordance with the profile information, and generates a transformation description by integrating the selected transformation description components. A transformation unit transforms the selected source document using the generated transformation description, thus generating contents of a user interface that implements manipulations of the device to be manipulated by the manipulation device. The contents of the user interface are transmitted to the manipulation device.

## Description

### FIELD OF THE INVENTION

The present invention relates to an information processing apparatus for generating a user interface required for a manipulation device to manipulate a device to be manipulated, its control method, and a program.

### BACKGROUND OF THE INVENTION

Various user interface adaptation techniques have been conventionally studied. For example, a technique that supports macro creation, sorts selection candidates, or estimates the next manipulation by learning user's previous manipulation histories is known.

On the other hand, in the Web world, a technique for applying contents according to the properties of devices that access the Web is known. For example, in Device Independence Activity (http://www.w3.org/2001/di/Activity) of W3C (World Wide Web Consortium, http://www.w3.org/), the format of profile information that describes device capabilities and user preferences, i.e., CC/PP (Composite Capabilities/Preferences Profile), and the specification of a protocol that makes negotiations between devices using that format are being laid down.

Upon presenting contents of a user interface, a technique for generating those contents by transforming a source file using a stylesheet in accordance with user preferences and device properties is known. For example, Japanese Patent Laid-Open No. 2001-154852 has proposed a technique that separately describes contents of a user interface on a stylesheet as presentation and interaction, and generates the contents of the user interface using XSLT. On the other hand, Japanese Patent Laid-Open No. 2001-344230 has proposed a technique that transforms elements of a logical document on the basis of rules which associates them with those of a style which designates a presentation method.

The user interface adaptation technique based on the prior art and, especially, the Web contents adaptation technique have as their principal object to mainly customize "display" such as the type of browser, window size, and the like with respect to the properties of a manipulation device, but they cannot customize logic or use modalities as the user interface in consideration of the properties of the manipulation device or user's properties/preferences.

For example, the above technique cannot cope with adaptation that selects a system-initiative flow for a user who is not familiar with manipulations or a user-initiative flow for a user who is familiar with manipulations. In consideration of adaptation in a multimodal user interface as a combination of a plurality of modalities such as a GUI (graphic user interface), speech, and the like, it is important to dynamically change use modalities (e.g., to provide a speech-based user interface to a vision-impaired person), but such adaptation cannot be made by the prior art.

### SUMMARY OF THE INVENTION

The present invention has been made in consideration of the aforementioned problems. An aspect of the present invention provides an information processing apparatus which can improve usability of manipulations to a device to be manipulated, its control method, and program.

According to one aspect of the present invention, there is provided an information processing apparatus for generating a user interface required for a manipulation device to manipulate a device to be manipulated, characterized by comprising:
reception means for receiving profile information including property information indicating properties of the manipulation device and user information associated with a user who manipulates the manipulation device;
selection means for selecting a source document from source document holding means, which describes a manipulation flow of the device to be manipulated, in accordance with the profile information received by the reception means;
generation means for selecting transformation description components from transformation description component holding means that holds transformation description components used to transform the source document in accordance with the profile information received by the reception means, and generating a transformation description by integrating the selected transformation description components;
transformation means for generating contents of a user interface that implements manipulations of the device to be manipulated by the manipulation device by transforming the source document by the transformation description; and
transmission means for transmitting the contents of the user interface to the manipulation device, and
in that the source document includes a description of abstract manipulation components which are independent from concrete manipulation components that implement the user interface of the manipulation device, and each transformation description component includes a description that transforms an abstract manipulation component in the source document into a concrete manipulation component of the manipulation device.

In a preferred embodiment, the source document, the transformation description components, and the contents of the user interface are described in an XML language.

In a preferred embodiment, the transformation description components and the transformation description are described as stylesheets.

In a preferred embodiment, the manipulation device is the information processing apparatus.

In a preferred embodiment, the manipulation device is independent from the device to be manipulated, and
the manipulation device comprises:
transmission means for transmitting the profile information to the information processing apparatus;
reception means for receiving the contents of the user interface from the information processing apparatus; and
execution means for executing the contents of the user interface.

In a preferred embodiment, the transmission means transmits the profile information input to the manipulation device to the information processing apparatus.

In a preferred embodiment, the transmission means transmits the profile information, which is generated based on a user's manipulation history on the manipulation device, to the information processing apparatus.

In a preferred embodiment, the manipulation device comprises acquisition means for acquiring the profile information corresponding to the user of the manipulation device, and
the transmission means transmits the profile information acquired by the acquisition means to the information processing apparatus.

According to another aspect of the present invention there is provided a method of controlling an information processing apparatus for generating a user interface required for a manipulation device to manipulate a device to be manipulated, characterized by comprising:
a reception step of receiving profile information including property information indicating properties of the manipulation device and user information associated with a user who manipulates the manipulation device;
a selection step of selecting a source document from a source document group, which is stored in a storage medium and describes a manipulation flow of the device to be manipulated, in accordance with the profile information received in the reception step;
a generation step of selecting transformation description components from a transformation description component group, which is stored in the storage medium and is used to transform the source document in accordance with the profile information received in the reception step, and generating a transformation description by integrating the selected transformation description components;
a transformation step of generating contents of a user interface that implements manipulations of the device to be manipulated by the manipulation device by transforming the source document by the transformation description; and
a transmission step of transmitting the contents of the user interface to the manipulation device, and
in that the source document includes a description of abstract manipulation components which are independent from concrete manipulation components that implement the user interface of the manipulation device, and each transformation description component includes a description that transforms an abstract manipulation component in the source document into a concrete manipulation component of the manipulation device.

According to the present invention, there is provided a program that implements control of an information processing apparatus for generating a user interface required for a manipulation device to manipulate a device to be manipulated, characterized by comprising:
a program code of a reception step of receiving profile information including property information indicating properties of the manipulation device and user information associated with a user who manipulates the manipulation device;
a program code of a selection step of selecting a source document from a source document group, which is stored in a storage medium and describes a manipulation flow of the device to be manipulated, in accordance with the profile information received in the reception step;
a program code of a generation step of selecting transformation description components from a transformation description component group, which is stored in the storage medium and is used to transform the source document in accordance with the profile information received in the reception step, and generating a transformation description by integrating the selected transformation description components;
a program code of a transformation step of generating contents of a user interface that implements manipulations of the device to be manipulated by the manipulation device by transforming the source document by the transformation description; and
a program code of a transmission step of transmitting the contents of the user interface to the manipulation device, and
in that the source document includes a description of abstract manipulation components which are independent from concrete manipulation components that implement the user interface of the manipulation device, and each transformation description component includes a description that transforms an abstract manipulation component in the source document into a concrete manipulation component of the manipulation device.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a block diagram showing the arrangement of an information processing system according to an embodiment of the present invention;
Fig. 2 is a block diagram showing the hardware arrangement of a manipulation device according to the embodiment of the present invention;
Fig. 3 is a block diagram showing the hardware arrangement of a device to be manipulated according to the embodiment of the present invention;
Fig. 4 is a flowchart showing a process to be executed by the information processing system according to the embodiment of the present invention;
Fig. 5 shows an example of profile information according to the embodiment of the present invention;
Fig. 6 shows an example of a source document according to the embodiment of the present invention;
Fig. 7 shows an example of transformation of a source document including abstract UI components into concrete UI components according to the embodiment of the present invention;
Fig. 8 shows an example of a final stylesheet which is generated by selecting appropriate ones from a set of stylesheet components in accordance with profile information, and combining them according to the embodiment of the present invention;
Fig. 9A shows an example of a source document of the device to be manipulated according to the embodiment of the present invention;
Fig. 9B shows an example of a source document of the device to be manipulated according to the embodiment of the present invention;
Fig. 9C shows an example of a source document of the device to be manipulated according to the embodiment of the present invention;
Fig. 9D shows an example of a source document of the device to be manipulated according to the embodiment of the present invention;
Fig. 9E shows an example of a source document of the device to be manipulated according to the embodiment of the present invention;
Fig. 10A shows an example of a stylesheet component according to the embodiment of the present invention;
Fig. 10B shows an example of a stylesheet component according to the embodiment of the present invention;
Fig. 11A shows an example of a stylesheet component according to the embodiment of the present invention;
Fig. 11B shows an example of a stylesheet component according to the embodiment of the present invention;
Fig. 11C shows an example of a stylesheet component according to the embodiment of the present invention;
Fig. 12 shows an example of a stylesheet component according to the embodiment of the present invention;
Fig. 13 shows an example of a stylesheet according to the embodiment of the present invention;
Fig. 14A shows an example of the contents of a user interface according to the embodiment of the present invention;
Fig. 14B shows an example of the contents of a user interface according to the embodiment of the present invention;
Fig. 14C shows an example of the contents of a user interface according to the embodiment of the present invention;
Fig. 14D shows an example of the contents of a user interface according to the embodiment of the present invention;
Fig. 14E shows an example of the contents of a user interface according to the embodiment of the present invention;
Fig. 14F shows an example of the contents of a user interface according to the embodiment of the present invention;
Fig. 15 shows an example of a display window when the contents of the user interface according to the embodiment of the present invention are executed by a multimodal browser;
Fig. 16 shows an example of a style attribute description part, which is separated from a stylesheet used to transform abstract UI components in a source document into concrete UI component, and is described in an application-independent format, according to another embodiment of the present invention; and
Fig. 17 shows an example of a stylesheet according to another embodiment of the present invention.

### DETAILED DESCRIPTION OF THE PREFERRED EMBODIMENTS

Preferred embodiments of the present invention will now be described in detail in accordance with the accompanying drawings.

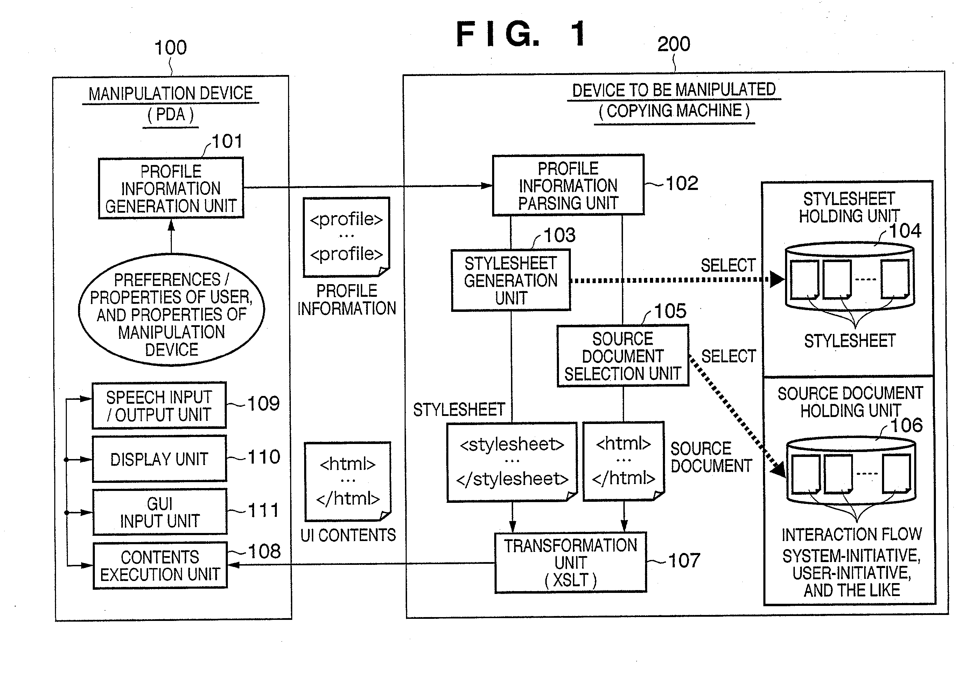

Fig. 1 is a block diagram showing the arrangement of an information processing system according to an embodiment of the present invention.

In this embodiment, a case will be exemplified below wherein a PDA is assumed as a manipulation device as a building component of an information processing system, and a copying machine is assumed as a device to be manipulated by that manipulation device.

Note that this embodiment will explain the manipulation device and device to be manipulated as independent devices. However, the present invention can be applied to a device which is configured by integrating the manipulation device and device to be manipulated.

In a manipulation device 100 shown in Fig. 1, reference numeral 101 denotes a profile information generation unit, which generates profile information, used as information associated with manipulations of the manipulation device, on the basis of the properties of the manipulation device and the property/preference information of the user, and transmits the generated profile information to a device 200 to be manipulated.

Reference numeral 108 denotes a contents execution unit of a user interface (UI) that executes the contents of the user interface, which are transmitted from the device 200 to be manipulated and are described in a multimodal markup language (to be abbreviated as MMML hereinafter), using a multimodal browser that allows inputs/outputs by means of speech and GUI.

Reference numeral 109 denotes a speech input/output unit which inputs/outputs speech to the contents of the user interface executed by the contents execution unit 108. Reference numeral 110 denotes a display unit which displays the contents of the user interface executed by the contents execution unit 108.

Reference numeral 111 denotes a GUI input unit which makes a GUI input based on the contents of the user interface executed by the contents execution unit 108.

On the other hand, in the device 200 to be manipulated shown in Fig. 1, reference numeral 102 denotes a profile information parsing unit, which parses profile information received from the manipulation device 100. Reference numeral 103 denotes a stylesheet generation unit which searches a stylesheet holding unit 104 for stylesheets using the profile information parsed by the profile information parsing unit 102, and combines the found stylesheets. Reference numeral 104 denotes a stylesheet holding unit which holds stylesheets that describe modalities of the manipulation device as components.

Reference numeral 105 denotes a source document selection unit, which selects a source document from a source document holding unit 106 using the profile information parsed by the profile information parsing unit 102. Reference numeral 106 denotes a source document holding unit which holds source document that describe flows of system-initiative manipulations, user-initiative manipulations, and the like.

Reference numeral 107 denotes a transformation unit (XSLT: XSL Transformation), which transforms a source document selected by the source document selection unit 105 into MMML as an XML description language of a multimodal user interface using a stylesheet generated by the stylesheet generation unit 103, and transmits the transformation result to the contents execution unit 108 of the manipulation device 100. Note that the multimodal user interface is a user interface that allows inputs/outputs by means of a plurality of modalities such as speech, GUI, and the like.

Note that the source document includes a description of abstract manipulation (UI) components, which are independent from concrete manipulation (UI) components (modalities (GUI component and speech input/output components)) required to implement the user interface of the manipulation device 100. The stylesheet includes a description that transforms abstract manipulation components in the source document into concrete manipulation components of the manipulation device 100.

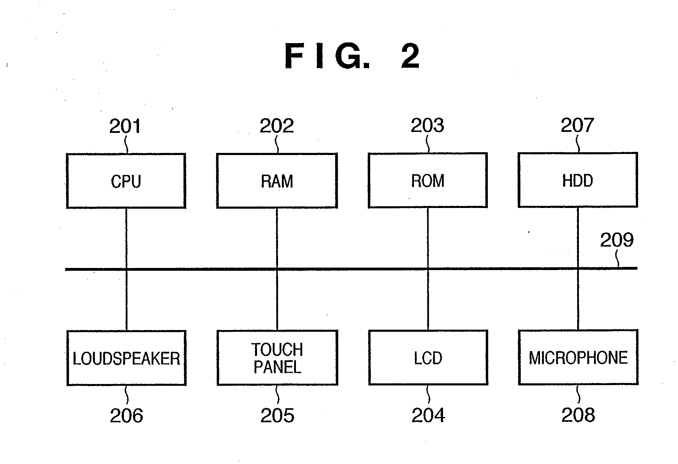

The hardware arrangement of the manipulation device 100 will be described below using Fig. 2.

Fig. 2 is a block diagram showing the hardware arrangement of the manipulation device according to the embodiment of the present invention.

Referring to Fig. 2, reference numeral 201 denotes a CPU which operates a program that implements a flowchart to be described later. Reference numeral 202 denotes a RAM which provides a storage area, work area, and data temporary save area required for the operation of the program. Reference numeral 203 denotes a ROM which holds the program that implements the flowchart to be described later, and various data.

Reference numeral 204 denotes a liquid crystal display device (LCD) which displays text, images, and the like. Note that another display device such as a CRT or the like may be used in place of this LCD 204. Reference numeral 205 denotes a touch panel which implements various data inputs and manipulations of the user interface. Operations to this touch panel are made by the user's finger or a dedicated pan. In addition to this touch panel 205, a keyboard and pointing device may be equipped.

Reference numeral 206 denotes a loudspeaker, which outputs synthetic speech. Reference numeral 207 denotes a rewritable external storage device. In this embodiment, a hard disk drive (HDD) is used as the external storage device 207. The HDD 207 stores various programs including, e.g., a program of a browser or the like which implements the user interface.

Reference numeral 208 denotes a microphone used to make a speech input for speech recognition. Reference numeral 209 denotes a bus which interconnects the respective building components of the manipulation device 100.

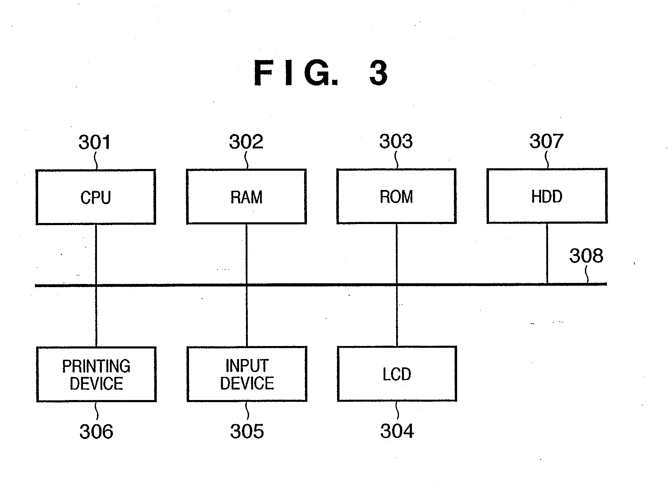

The hardware arrangement of the device 200 to be manipulated will be described below using Fig. 3.

Fig. 3 is a block diagram showing the hardware arrangement of the device to be manipulated according to the embodiment of the present invention.

Referring to Fig. 3, reference numeral 301 denotes a CPU which operates a program that implements a flowchart to be described later. Reference numeral 302 denotes a RAM which provides a storage area, work area, and data temporary save area required for the operation of the program. Reference numeral 303 denotes a ROM which holds the program that implements the flowchart to be described later, and various data.

Reference numeral 304 denotes a liquid crystal display device (LCD) which displays text, images, and the like. Note that another display device such as a CRT or the like may be used in place of this LCD 304. Reference numeral 305 denotes an input device, which includes, e.g., a ten-key pad and buttons. In addition, a pointing device and keyboard may be used.

Reference numeral 306 denotes a printing device which comprises, e.g., a laser beam printing device. In addition, an ink-jet printing device or thermal transfer printing device may be used. Reference numeral 307 denotes a rewritable external storage device. In this embodiment, a hard disk drive (HDD) is used as the external storage device 307. The HDD 307 stores various data such as stylesheets, source documents, and the like.

Reference numeral 308 denotes a bus which interconnects the building components of the device 200 to be manipulated.

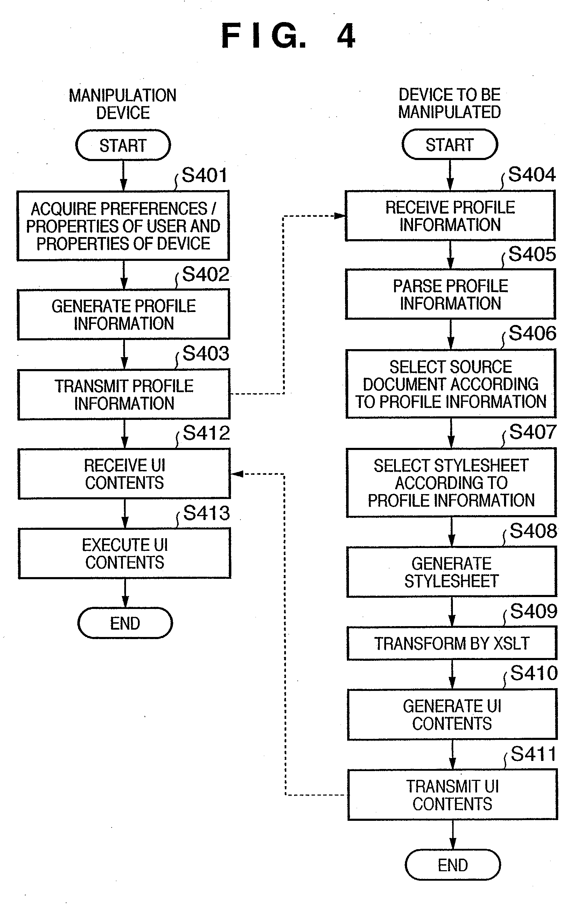

The process to be executed by the information processing system of this embodiment will be described below using Fig. 4.

Fig. 4 is a flowchart showing the process to be executed by the information processing system according to the embodiment of the present invention.

Fig. 4 will explain a method of transmitting profile information which includes property information that indicates the properties of the manipulation device 100, and user information associated with the properties and preferences of the user to the device 200 to be manipulated, and receiving the contents of the user interface according to the profile information.

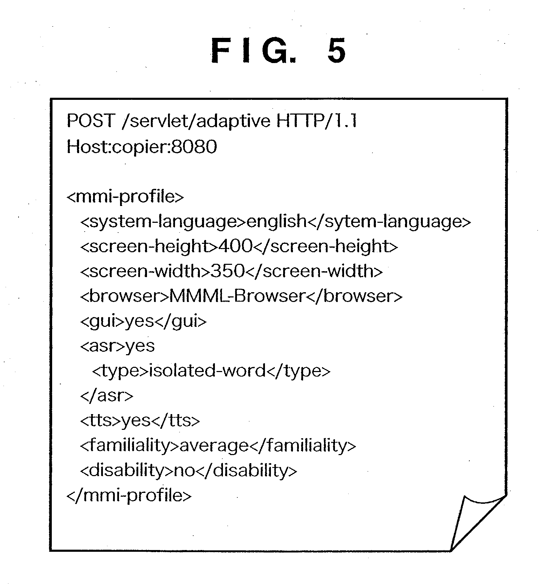

The manipulation device 100 acquires manipulation device/user information including property information indicating the properties of the manipulation device itself and user information associated with the properties and preferences of the user (step S401). This embodiment adopts a method of inputting this manipulation device information from an input window implemented by a GUI on the LCD 204 by the user himself or herself. The profile information generation unit 101 generates profile information, which describes, in XML, information such as a use language, the screen size of the manipulation device used, familiarity, disability information, and the like, as shown in Fig. 5, using the manipulation device/user information (step S402).

This profile information is transmitted to the device 200 to be manipulated as a POST request of an HTTP message (step S403).

Note that the profile information shown in Fig. 5 is a description example which describes: the use language is English (<system-language>english</system-language>), the screen size of the manipulation device is 400 x 340 (<screen-height>400</screen-height>, <screen-width>340</screen-width>), a browser is a multimodal browser that allows speech and GUI inputs/outputs (<browser>MMML-Browser</browser>), available modalities are a GUI and speech (<gui>yes</gui>, <tts>yes</tts>, <asr>yes...</asr>), the type of speech recognition is isolated word speech recognition (<asr>yes<type>isolated-word</type></asr>), the familiarity is average (<familiarity>average</familiality>), and disability information is no,which means that the user is not a disabled person (<disability>normal</disability>).

On the other hand, the device 200 to be manipulated receives the profile information from the manipulation device 100 (step S404). The profile information parsing unit 102 parses the profile information using an XML parser (step S405).

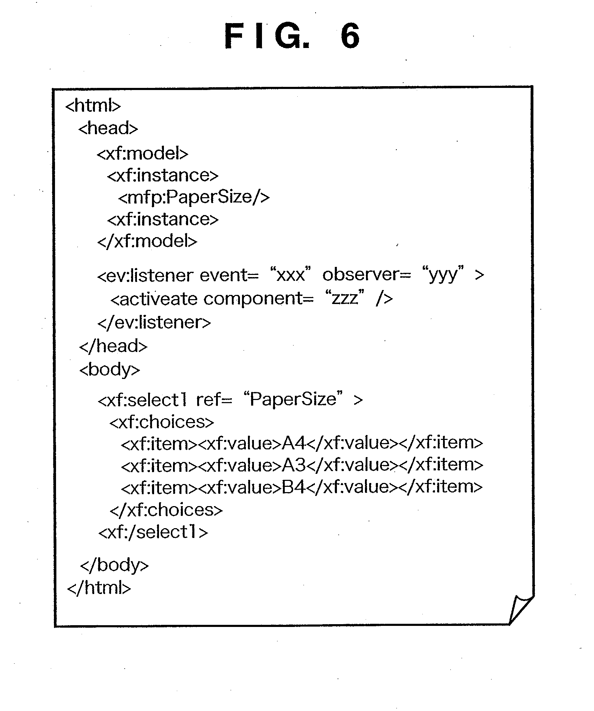

The source document selection unit 105 selects an appropriate source document from those which are held in the source document holding unit 106 and describe a flow shown in Fig. 6 in accordance with the profile information (step S406).

Note that a source document is an XML document which uses XHTML as a container. This document describes data models and abstract user interface components (to be referred to as abstract UI components) using XForms (http://www.w3.org/TR/xforms/) as the specification of W3C, and an event-driven flow using XML Events (http://www.w3.org/TR/xml-events/) as the specification of W3C. As the contents of the flow, a user-initiative flow, system-initiative flow, mixed-initiative flow of them, and the like are known as typical interactive patterns, and they are adopted as flows.

On the other hand, the stylesheet holding unit 104 holds components of stylesheets (to be referred to as stylesheet components) used to transform abstract UI components included in a source document (interaction flow description) into concrete UI components (to be referred to as concrete UI components hereinafter). Note that each stylesheet component serves as a transformation description component used to transform a description of an abstract UI component in a source document into that of a concrete UI component.

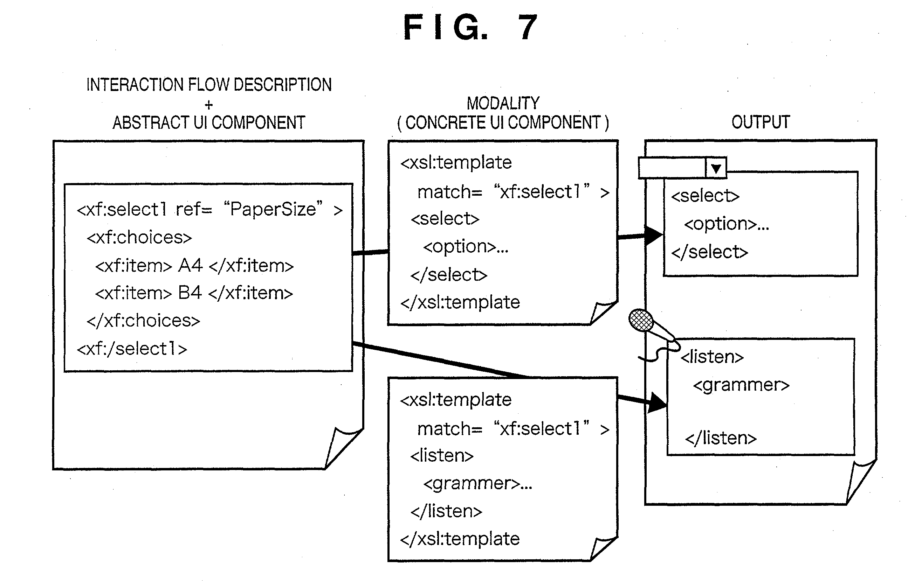

For example, a source document describes an abstract UI component that selects one of a plurality of options like paper size selection of a copying machine using an element "select1 (XForms)". A stylesheet used to transform this component into a concrete UI component such as a GUI pull-down menu, speech input, or the like is a stylesheet component held in the stylesheet holding unit 104 (Fig. 7).

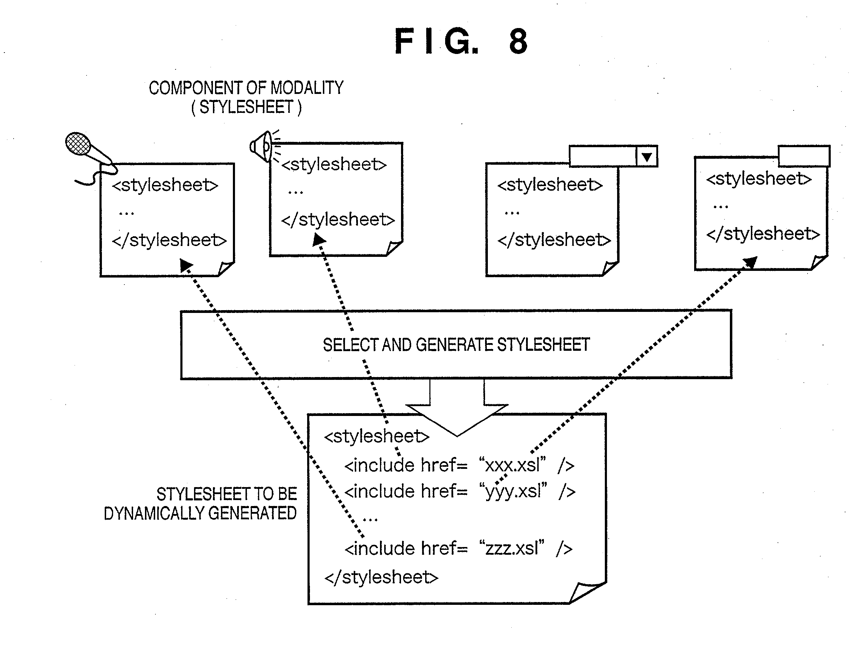

More specifically, the stylesheet holding unit 104 holds a set of such stylesheet components. The stylesheet generation unit 103 selects appropriate stylesheet components from the set of these stylesheet components in accordance with the profile information (step S407), as shown in Fig. 8.

For example, if it is parsed that the manipulation device has a speech input/output function and the user of interest is a vision-impaired person, a stylesheet component that transforms into a concrete UI component (e.g., speech synthesis/recognition component) is selected. The selected stylesheets (transformation description components) are integrated to dynamically generate a final stylesheet (transformation description) (step S408).

Note that rules, i.e., which of stylesheet components is to be selected in accordance with the profile information, are described by the developer of the user interface. As the description method, the rules may be directly described using a programming language or may be declaratively described in a predetermined description format. However, the method itself falls outside the scope of the present invention, and a detailed description thereof will be omitted.

The transformation unit 107 transforms the source document selected in step S406 using the generated stylesheet and an XSLT processor (step S409). In this manner, the final contents of the user interface are dynamically generated (step S410). The generated contents of the user interface are transmitted to the manipulation device 100 (step S411).

The manipulation device 100 receives the contents from the device 200 to be manipulated (step S412). The manipulation device 100 executes the received contents of the user interface by the contents execution unit 108 (step S413). In this manner, the user interface required to manipulate the device 200 to be manipulated in accordance with the properties of the manipulation device 100 and user's properties/preferences can be implemented on the manipulation device.

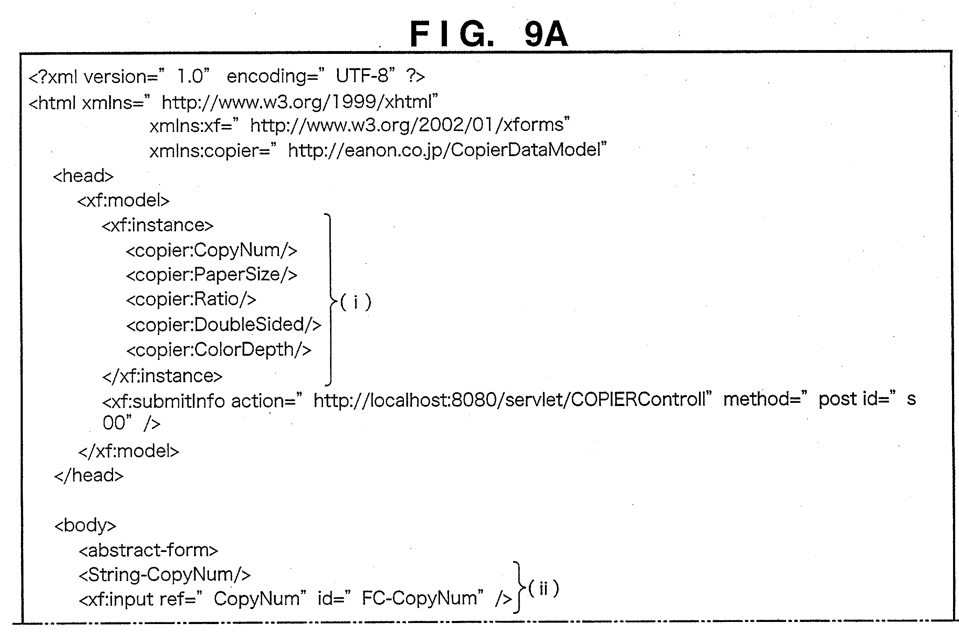

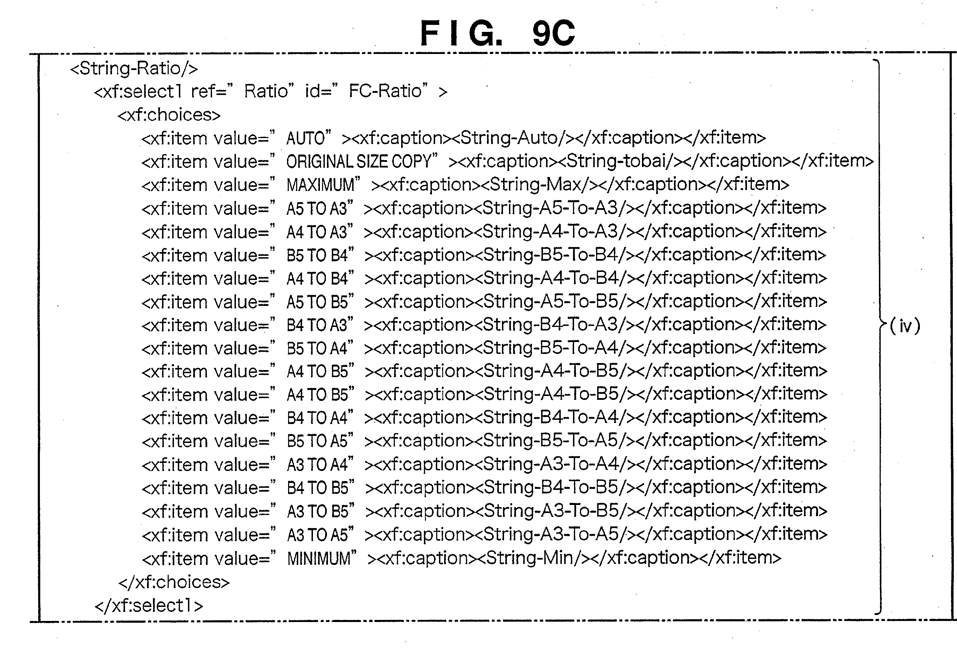

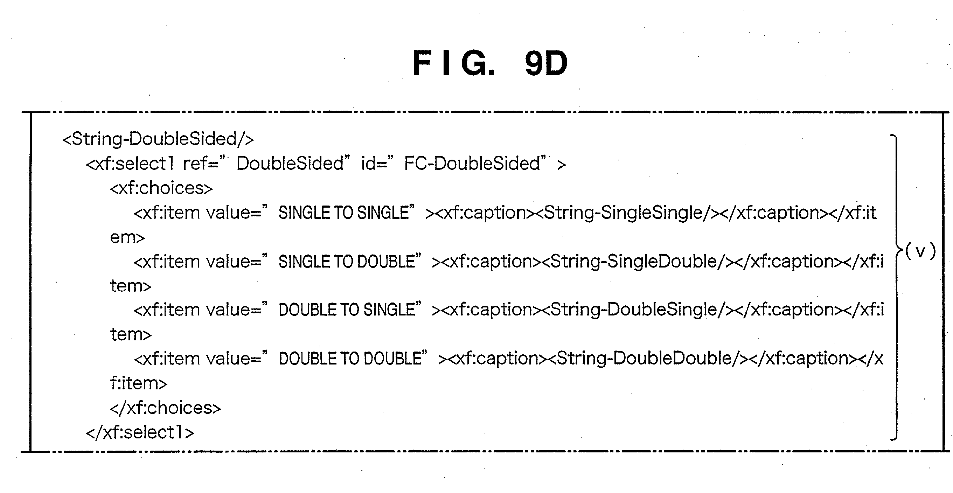

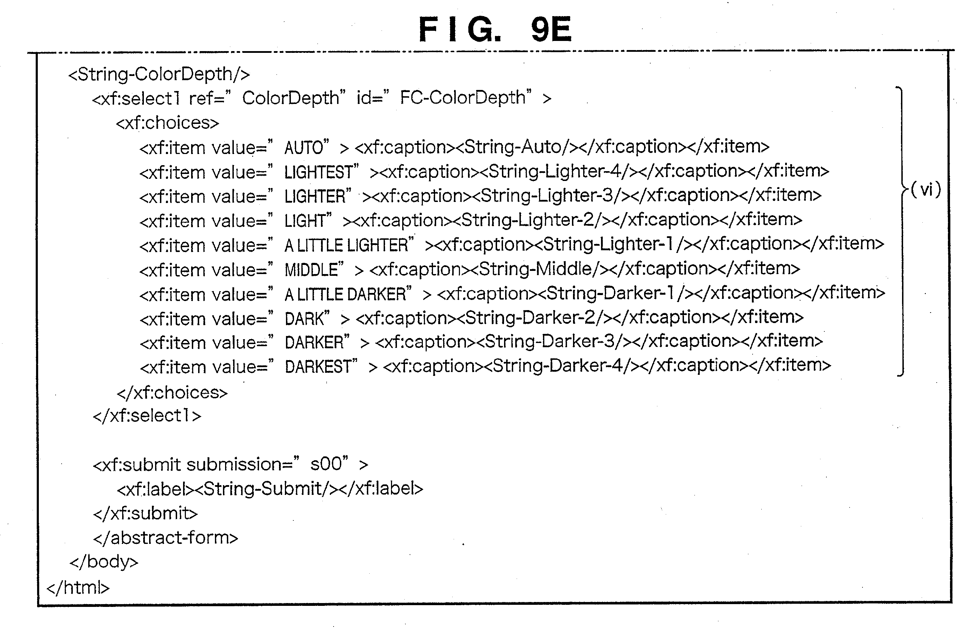

An example of the source document of the device 200 to be manipulated will be explained below using Figs. 9A to 9E.

Figs. 9A to 9E show an example of the source document of the device to be manipulated according to the embodiment of the present invention.

Especially, Figs. 9A to 9E show an example of the source document of the device 200 to be manipulated in case of user-initiative flows.

In Fig. 9A, (i) is a description of data models, and the number of copies (<copier:CopyNum>), paper size (<copier:PaperSize>), magnification (<copier:Ratio>), double-sided setup (<copier:DoubleSided>), and density (<copier:CopyDepth>) are describes as models (functions) of the device to be manipulated.
(ii) is a description associated with an input of the number of copies, and an abstract UI component used to input a value is described using an element "input (XForms)".
(iii) is a description associated with paper selection, and an abstract UI component used to select one of a plurality of options is described using an element "select1 (XForms)".

Likewise, (iv) is a description associated with the magnification, (v) is a description associated with the double-sided setup, and (vi) is a description associated with the density setup.

<String-XXXX/> at the head of each of the descriptions (iii) to (vi) (e.g., <String-PaperSize/> in (iii)) describes an output of a character string, and is added under the assumption that such character string is transformed into that of an appropriate language in accordance with the use language.

Stylesheet components held in the stylesheet holding unit 104 will be described in detail below.

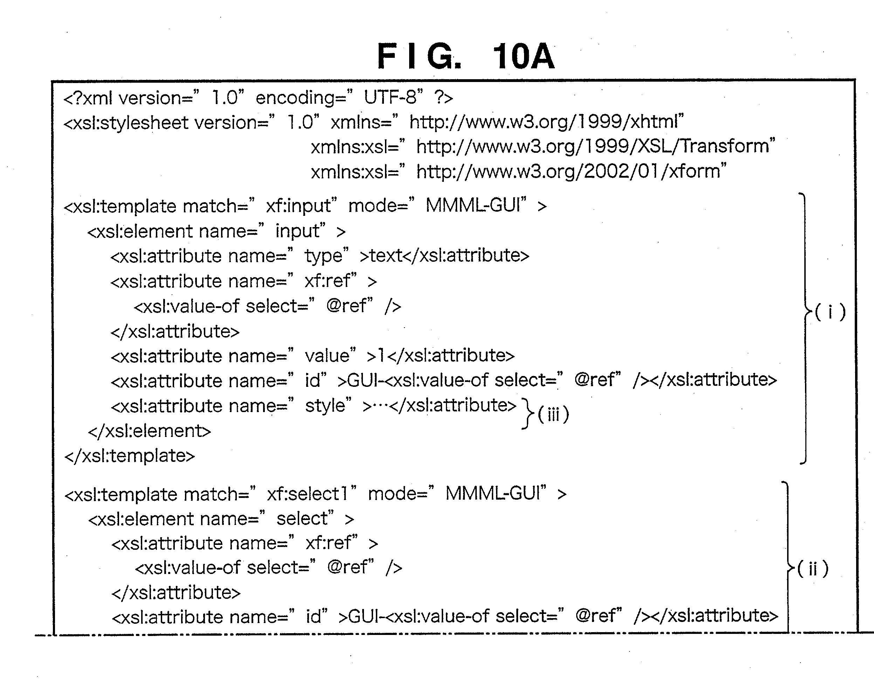

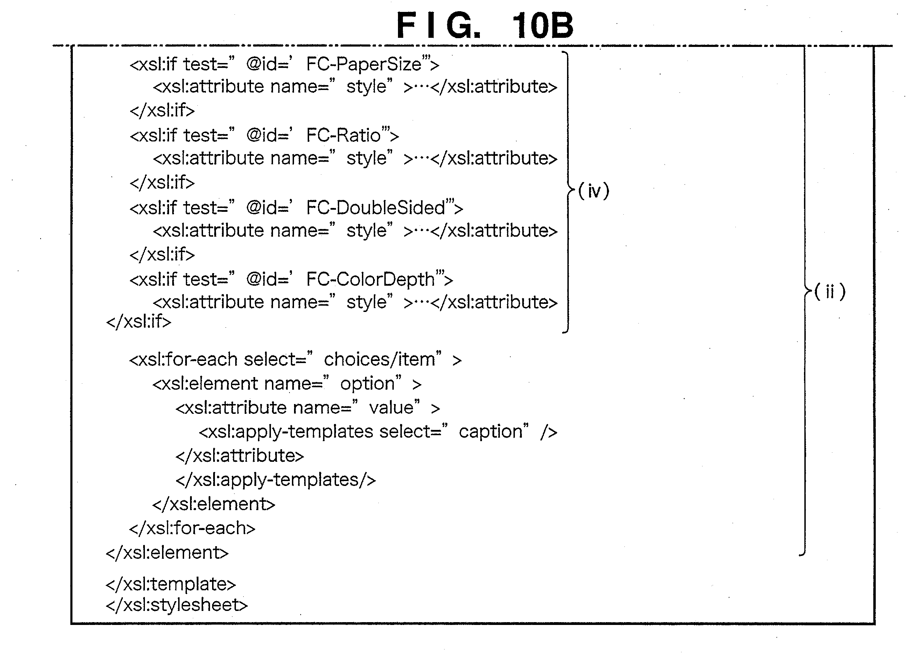

Figs. 10A and 10B show an example of stylesheet components according to the embodiment of the present invention.

Especially, Figs. 10A and 10B show an example of stylesheet components used to transform abstract UI components in the source document into concrete UI components.

For example, a template (i) in Fig. 10A is applied to "input" in (ii) of Fig. 9A, which is transformed into an element "input" that means a GUI text box in MMML.

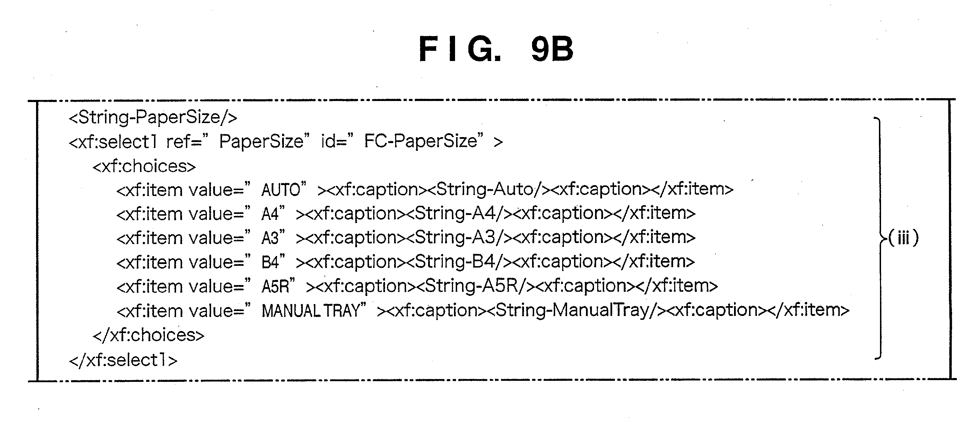

A template (ii) in Figs. 10A and 10B is applied to "select1" in (iii) of Fig. 9B, which is transformed into an element "select" that means a pull-down menu in MMML.

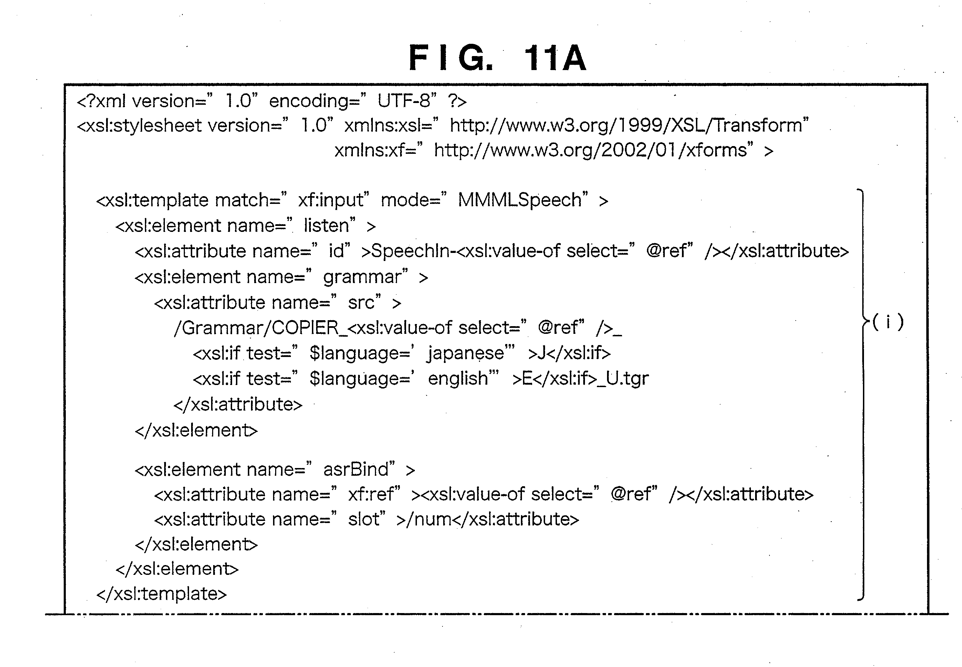

Figs. 11A to 11C show an example of stylesheet components according to the embodiment of the present invention.

Especially, Figs. 11A to 11C show an example of stylesheet components used to transform abstract UI components of the source document into a description of a speech input in MMML.

For example, "input" in (ii) in Fig. 9A is transformed into an element "listen" which is defined as a description of a concrete UI component of a speech input in MMML by a template (i) in Fig. 11A.

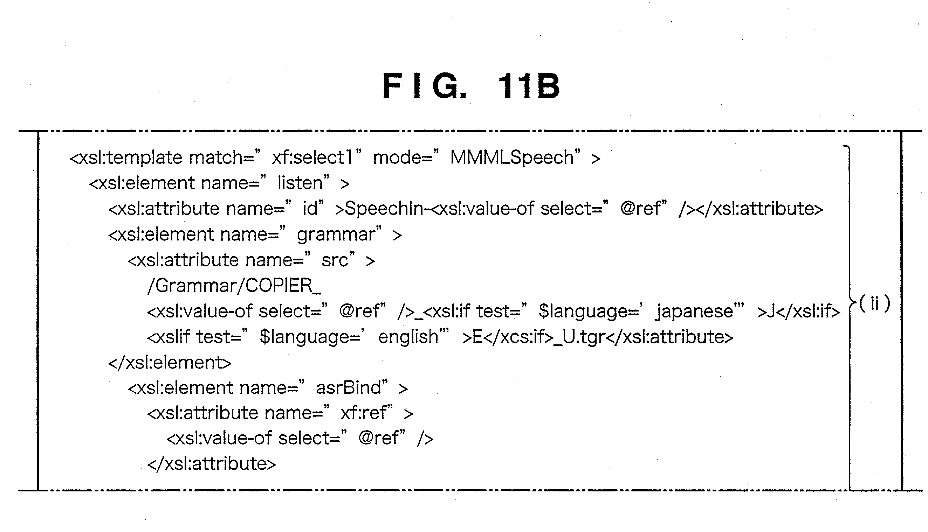

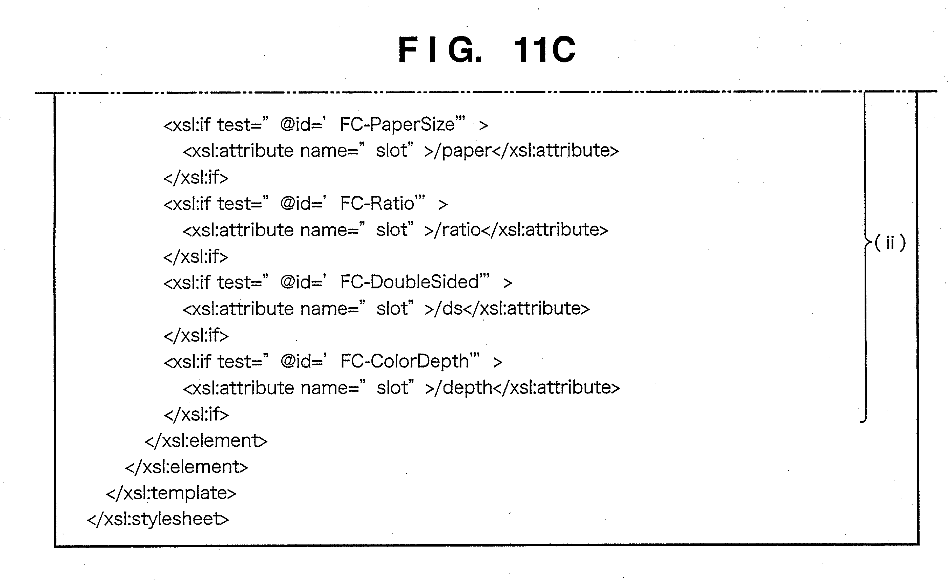

Also, "select1" in (iii) in Fig. 9B is similarly transformed into an element "listen" by a template (ii) in Fig. 11B. Note that the contents of a speech recognition grammar used to actually recognize input speech must be directly described by the developer of the user interface and prepared in advance.

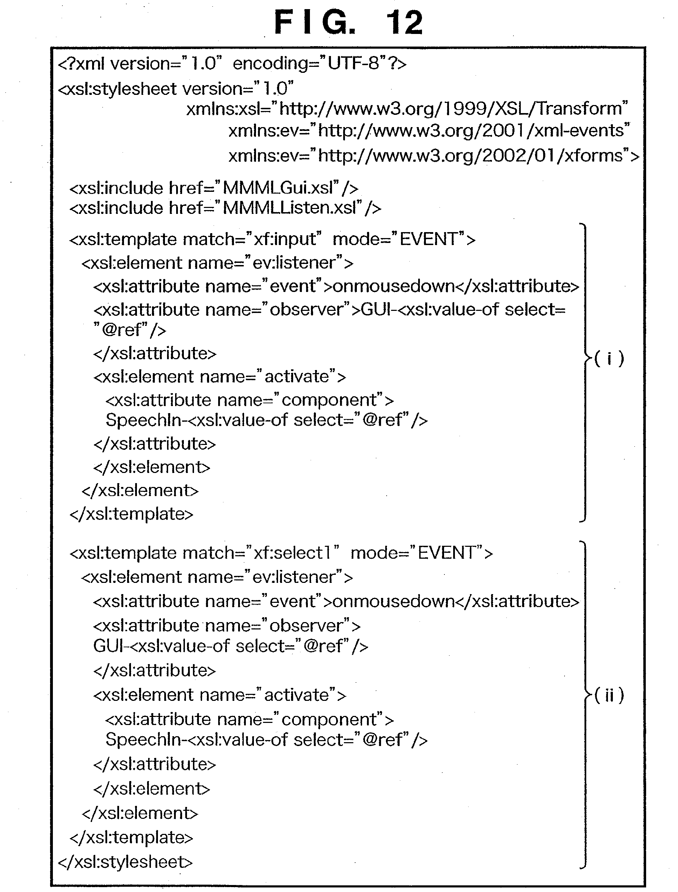

Fig. 12 shows an example of a stylesheet component according to the embodiment of the present invention.

Especially, Fig. 12 shows an example of a stylesheet component used to generate an MMML description that synchronizes a GUI component and speech input component which are bound to an identical data element in response to an event.

For example, when a GUI text box and speech input are bound to the setup of the number of copies, an action that activates a corresponding speech input (to set in an inputtable state) when the text box is clicked and focused is typical in the multimodal user interface.

The role of this stylesheet component is to generate a description of such synchronization. Since MMML of this embodiment defines to describe an event using XML Events, this stylesheet component becomes a set of templates that match respective abstract UI components of the source document and output descriptions of XML Events.

Note that (i) in Fig. 12 is a template which matches an element "input" in (ii) of Fig. 9A, and generates a description of synchronization that activates a speech input component output by (i) in Fig. 11A upon generation of an event "onmousedown" in an MMML GUI component output by (i) in Fig. 10A. Also, (ii) in Fig. 12 is substantially the same as (i) in Fig. 12.

The stylesheet generation unit 103 selects appropriate stylesheet components from, e.g., the set of stylesheet components shown in Figs. 10A to 12 in accordance with the profile information shown in Fig. 5, and dynamically generates a stylesheet.

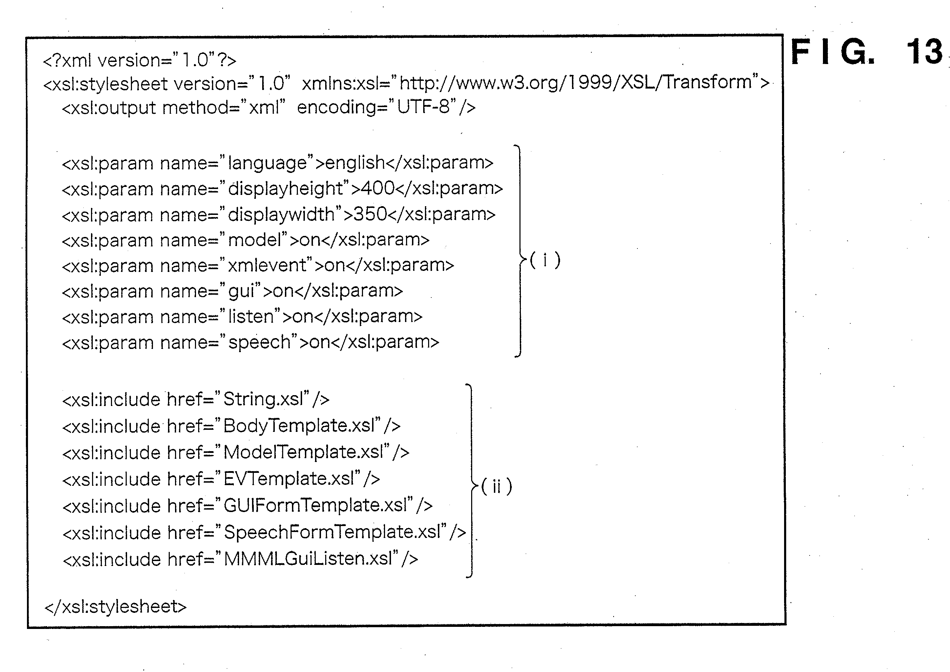

A dynamically generated stylesheet will be described with reference to Fig. 13.

Fig. 13 shows an example of a stylesheet according to the embodiment of the present invention.
(i) in Fig. 13 is a description that indicates parameters set based on the profile information, which are used as conditional branches and parameters in the stylesheet components. For example, <system-language></system-language> in Fig. 5, which sets the use language of the user is set as a parameter "language" in (i) in Fig. 13.
   With this parameter, text to be displayed on the screen, recognition lexical items, and synthetic speech are changed in accordance with the use language. <screen-height></screen-height> and <screen-width></screen-width> in Fig. 5, which set the screen size of the manipulation device 100 are respectively set as parameters "displayheight" and "displaywidth" in Fig. 13.
   The screen size, caption, GUI form size, and the like of the browser are changed in accordance with these values. Parameters "gui", "listen", "speech", and the like in (i) in Fig. 13 are determined in accordance with values of <gui></gui>, <asr></asr>, and <tts></tts> in Fig. 5, which set whether or not a GUI and speech recognition/synthesis functions are available, and are to be used if they are available in the manipulation device 100.
   Since the profile information in Fig. 5 indicates that both the speech recognition and synthesis functions are allowed, the parameters "gui", "listen", and "speech" in (i) in Fig. 13 are set to have values ("on") accordingly. These values are used as flags and the like used to switch ON/OFF of a GUI display and speech recognition/synthesis functions.
(ii) in Fig. 13 is a description indicating which of stylesheet components is included in accordance with the profile information. For example, if <gui></gui> in Fig. 5 is on, a stylesheet component in Fig. 13 (in this example, file name = GUIFormTemplate.xsl) is included.

Likewise, if <asr></asr> and <tts></tts> in Fig. 5 are on, a stylesheet component in Fig. 13 (in this example, file name = SpeechFormTemplate.xsl) is included.

By transforming the source document in Figs. 9A to 9C by the transformation unit 107 on the basis of the final stylesheet generated in this way, the contents of the user interface according to the profile information can be generated.

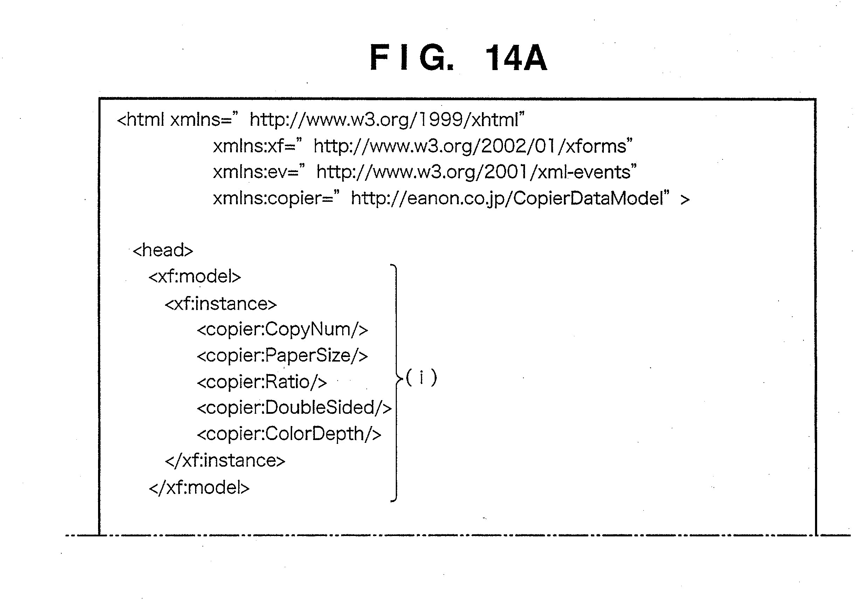

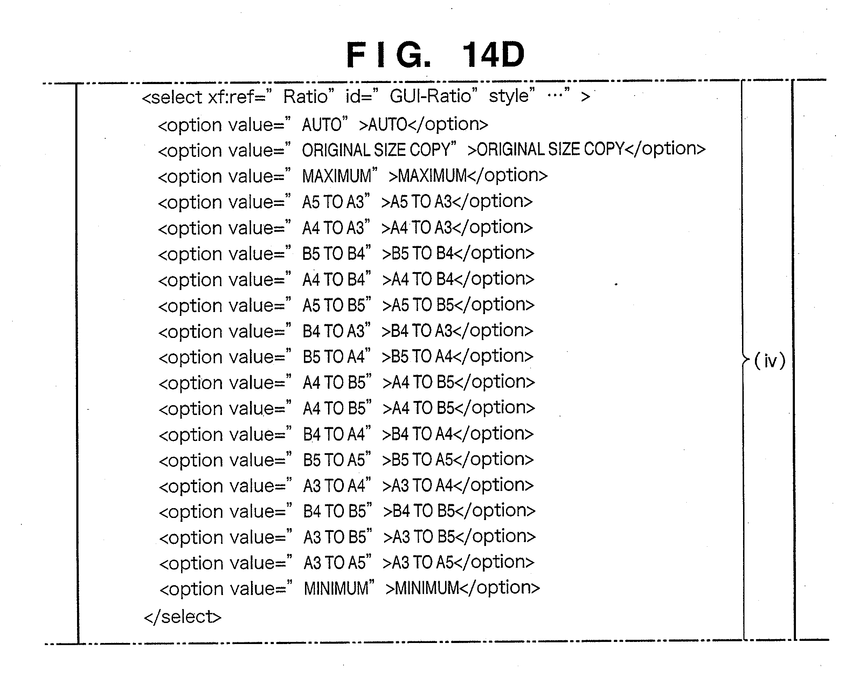

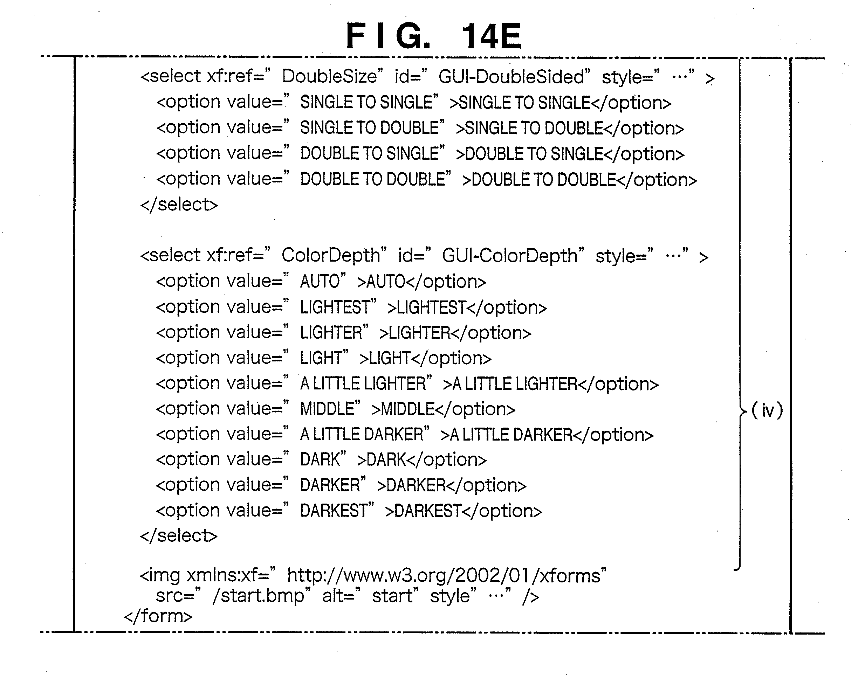

A description of the contents of the final user interface to be generated will be described below with reference to Figs. 14A to 14F.

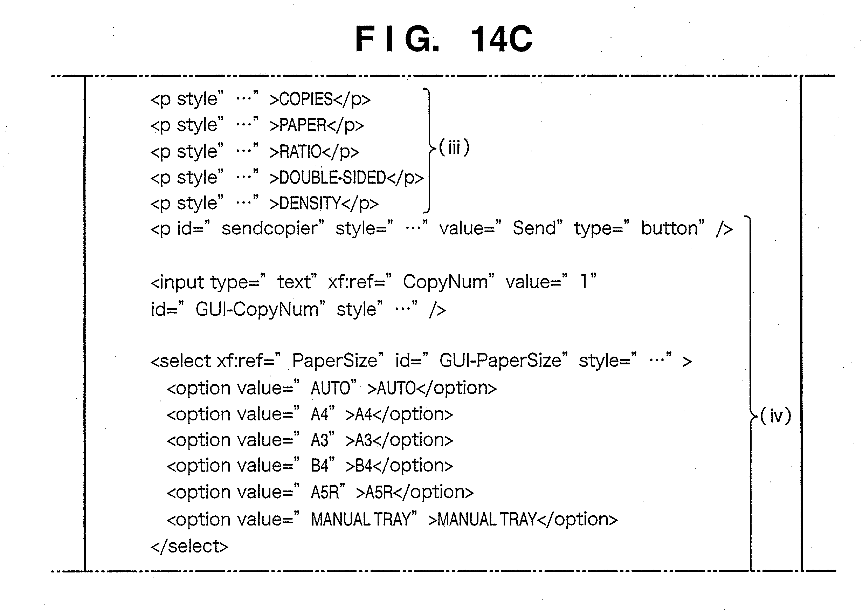

Figs. 14A to 14F show an example of the contents of the user interface according to the embodiment of the present invention.
(i) in Fig. 14A is a description of data models of the device 200 to be manipulated, and describes parameters such as the number of copies (<copier:CopyNum>) and the like.

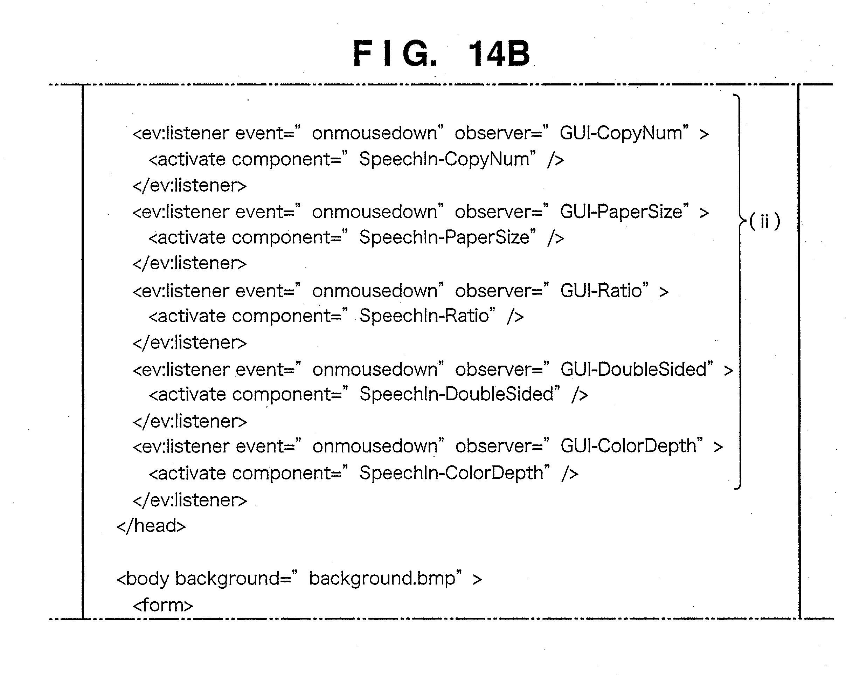

(ii) in Fig. 14B is a description of an event that activates a speech input component to be described later upon clicking a GUI form such as a text box, pull-down menu, or the like using a mouse.
(iii) in Fig. 14C is a description of captions to be displayed such as "copies", "paper", "ratio", "double-sided", "density", and the like.
(iv) in Figs. 14C to 14F is a description of GUI components such as a text box, pull-down menu, buttons, and the like.

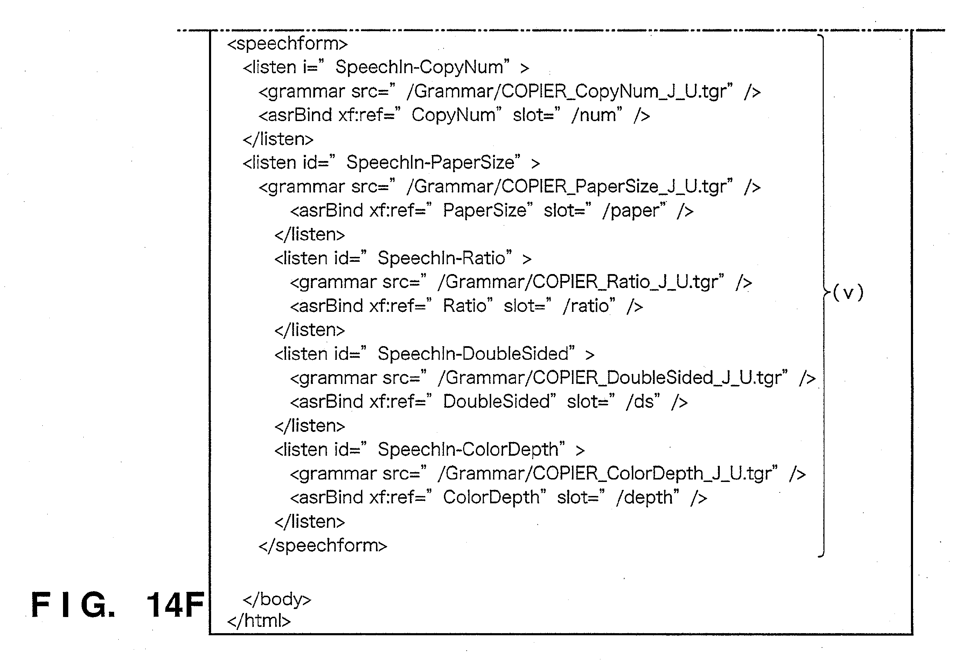

(v) in Fig. 14F is a description of a speech input component, and indicates that a speech recognition grammar is loaded to start speech recognition, and to bind the speech recognition result to parameters defined by the data models.

That is, upon clicking a GUI form, the speech input component is activated to start speech recognition, and the speech recognition result is bound to parameters to fill the clicked GUI form with the recognition result. Also, the form can be filled by direct inputs or selection from a pull-down menu. In this way, a multimodal user interface that allows speech and GUI inputs can be implemented.

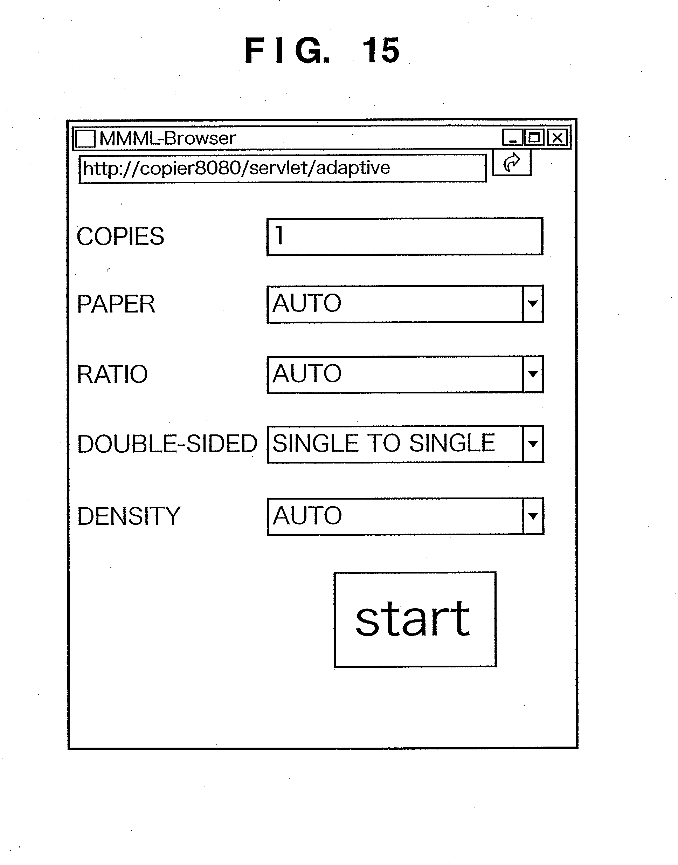

An example of a display window when the contents shown in Figs. 14A to 14F are executed by the multimodal browser that allows inputs/outputs by means of speech and GUI is as shown in Fig. 15.

As described above, according to this embodiment, the device to be manipulated dynamically generates logic or use modalities as the user interface of the manipulation device in consideration of the properties of the manipulation device 100 and user properties/preferences, and the manipulation device can implement such user interface. Hence, a user interface which is appropriately customized for a user who is not familiar with operations or a user such as a vision-impaired person or the like can be provided, thereby improving the usability.

### [Another Embodiment]

In the above embodiment, the information shown in Fig. 5 which assumes English-speaking countries as the use language is used as the profile information. However, the use language is not limited to English, and a system which assumes various use language environments can be built by generating profile information corresponding to each use language environment as needed, i.e., a plurality of pieces of different profile information corresponding to a plurality of different use languages. For example, if the use language is Japanese, Japanese is set as the use language (<system-language>japanese</system-language>) in Fig. 5. In order to display information in Japanese, corresponding portions of various source documents are described in Japanese.

In such arrangement, when the contents of this user interface are executed using the multimodal browser, the user interface can be provided in Japanese. In this manner, the modalities and display can be changed in accordance with the profile information.

### [Still Another Embodiment]

The above embodiment assumes a user who is a normal and has an average familiarity with the device 200 to be manipulated (copying machine), and has exemplified a case wherein a user-initiative UI that allows speech and GUI inputs and makes the user actively fill a text box and pull-down menu is presented on the manipulation device 100 (PDA). However, the present invention is not limited to such specific embodiment.

For example, a system-initiative UI in which the system makes inquiries about input items and fills items with answers of the user can be presented to a vision-impaired person or a user who has low familiarity, and especially a speech-based system-initiative UI to a vision-impaired person. For example, the following inquiries and answers are made:
Copying machine: "How many copies?"
User: "Three"
Copying machine: "Do you want three copies?"
User: "Yes"
Copying machine: "Which paper size do you want to use?"
User: "A4"
Copying machine: "Do you want to start copying?"
User: "Yes"

### [Start copy]

In this case, the contents which implement the above inquiries and answers are described.

### [Still Another Embodiment]

In the above embodiment, word speech recognition that accepts isolated words such as "five", "A4", and the like is assumed as the type of speech recognition in the manipulation device which executes the contents of the user interface. Alternatively, continuous speech recognition that accepts continuous speech as a combination of a plurality of words may be adopted. With this speech recognition, when the user utters "five copies, A4 to A3, darkest", a plurality of corresponding fields can be simultaneously filled.

### [Still Another Embodiment]

In the above embodiment, a typical stylesheet that transforms an abstract UI component into a concrete UI component, and an application-dependent stylesheet including styles of text and a form, captions, and the like are separated, and the typical stylesheet is described in an application-independent format that can be re-used in other devices other than the device 200 to be manipulated (copying machine), thus further reducing authoring cost.

For example, in Fig. 10A, style attributes (descriptions that designate the position and size of a GUI component) in attributes of "input" and "select1" respectively have descriptions depending on an application, i.e., the UI of the device 200 to be manipulated (copying machine), as shown in (iii) and (iv) in Fig. 10A.

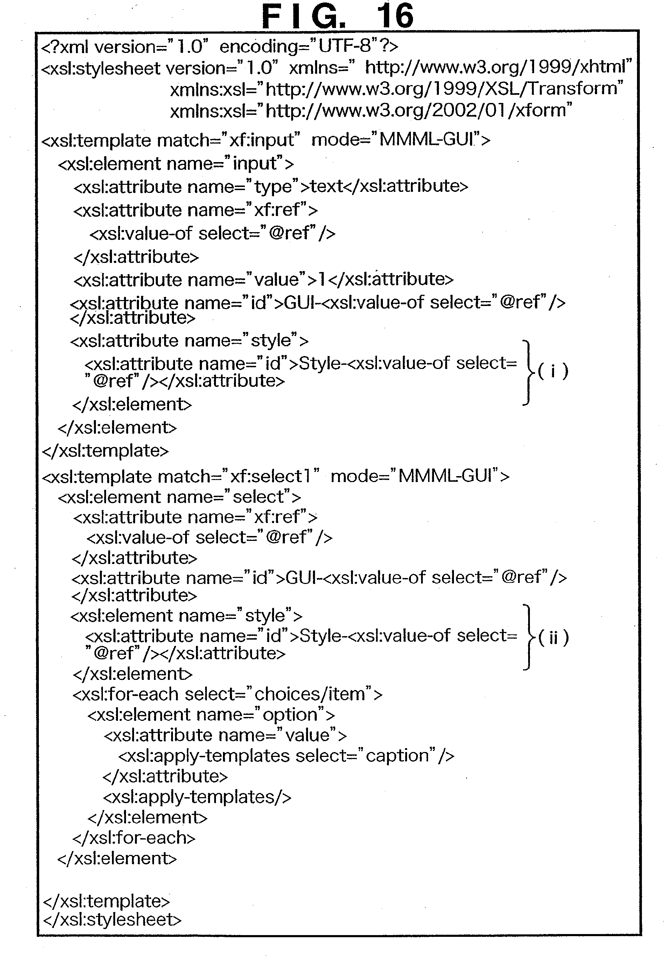

Portions other than style attributes are transformed first using a stylesheet shown in Fig. 16 in which (iii) in Fig. 10A is replaced by (i) in Fig. 16 and (iv) in Fig. 10A is replaced by (ii) in Fig. 16 in the stylesheet of Fig. 10A, and the transformation result is transformed using a stylesheet that transforms only the style attributes.

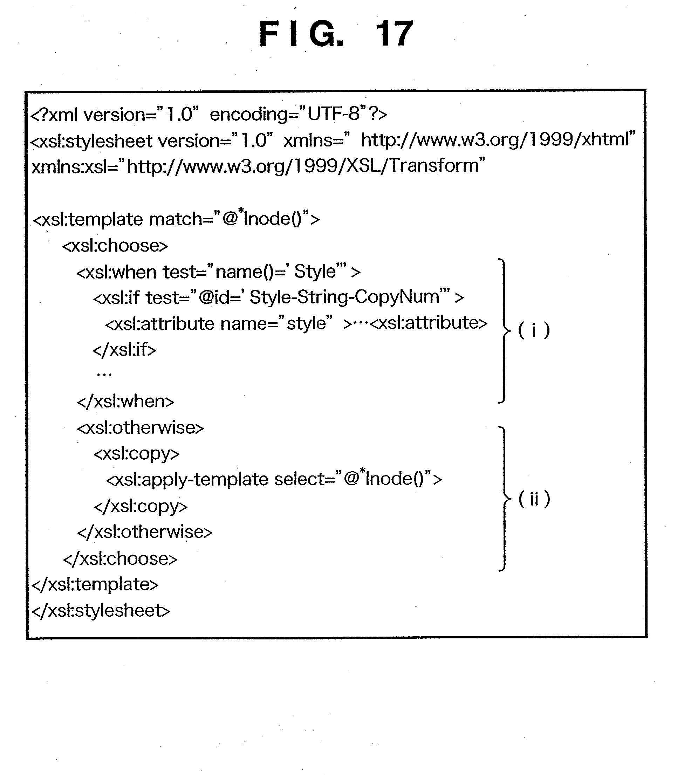

Fig. 17 shows an example of such stylesheet. In the stylesheet shown in Fig. 17, (i) in Fig. 17 transforms style attributes, and (ii) in Fig. 17 copies the remaining portions other than the style attributes. As a result, in the stylesheet shown in Fig. 16, only a description "an abstract UI component "input" is transformed into a GUI text box, and "select1" into a GUI pull-down menu" or the like remains, and a description that depends on a specific application, i.e., the UI of the device 200 to be manipulated (copying machine) is deleted. That is, the stylesheet shown in Fig. 16 can be used by other applications.

### [Still Another Embodiment]

In the above embodiment, the profile information is set by the user via the GUI implemented by the manipulation device 100. However, profile information may be dynamically generated based on user's manipulation histories of the manipulation device 100.

### [Still Another Embodiment]

In the above embodiment, the profile information is manually set by the GUI via the GUI implemented by the manipulation device 100. Alternatively, a user ID used to specify the user may be input, and a user information database that manages profile information for each user ID may be accessed using that user ID to acquire profile information corresponding to the user ID.

Note that this user information database may be managed by, e.g., the manipulation device 100 or by a dedicated server which can be accessed by the manipulation device 100 via a wired/wireless network.

### [Still Another Embodiment]

In the above embodiment, various programs that implement this embodiment are held in the ROM 203 of the manipulation device 100 and the ROM 303 of the device 200 to be manipulated. However, the present invention is not limited to such specific case. For example, these programs may be held in an external storage device that can be connected to the manipulation device 100 or device 200 to be manipulated (CD-ROM/R/RW drive, DVD-ROM/RAM/R/RW drive, ZIP drive, MO drive, or memory card (e.g., SD card, MM (multimedia) card, smart media, compact flash@) slot). Alternatively, dedicated hardware that implements various programs may be prepared.

The preferred embodiments of the present invention have been explained, and the present invention can be practiced in the forms of a system, apparatus, method, program, storage medium, and the like. Also, the present invention can be applied to either a system constituted by a plurality of devices, or an apparatus consisting of a single equipment.

Note that the present invention includes a case wherein the invention is achieved by directly or remotely supplying a program of software (a program corresponding to the flowchart shown in Fig. 4 in the embodiment) that implements the functions of the aforementioned embodiments to a system or apparatus, and reading out and executing the supplied program code by a computer of that system or apparatus. In this case, software need not have the form of program as long as it has the program function.

Therefore, the program code itself installed in a computer to implement the functional process of the present invention using the computer implements the present invention. That is, the scope of the claims of the present invention includes the computer program itself for implementing the functional process of the present invention.

In this case, the form of program is not particularly limited, and an object code, a program to be executed by an interpreter, script data to be supplied to an OS, and the like may be used as long as they have the program function.

As a recording medium for supplying the program, for example, a floppy® disk, hard disk, optical disk, magnetooptical disk, MO, CD-ROM, CD-R, CD-RW, magnetic tape, nonvolatile memory card, ROM, DVD (DVD-ROM, DVD-R), and the like may be used.

As another program supply method, the program may be supplied by establishing connection to a home page on the Internet using a browser on a client computer, and downloading the computer program itself of the present invention or a compressed file containing an automatic installation function from the home page onto a recording medium such as a hard disk or the like. Also, the program code that forms the program of the present invention may be segmented into a plurality of files, which may be downloaded from different home pages. That is, the present invention includes a WWW server which makes a plurality of users download a program file required to implement the functional process of the present invention by the computer.

Also, a storage medium such as a CD-ROM or the like, which stores the encrypted program of the present invention, may be delivered to the user, the user who has cleared a predetermined condition may be allowed to download key information that decrypts the program from a home page via the Internet, and the encrypted program may be executed using that key information to be installed on a computer, thus implementing the present invention.

The functions of the aforementioned embodiments may be implemented not only by executing the readout program code by the computer but also by some or all of actual processing operations executed by an OS or the like running on the computer on the basis of an instruction of that program.

Furthermore, the functions of the aforementioned embodiments may be implemented by some or all of actual processes executed by a CPU or the like arranged in a function extension board or a function extension unit, which is inserted in or connected to the computer, after the program read out from the recording medium is written in a memory of the extension board or unit.

The present invention is not limited to the above embodiments and various changes and modifications can be made within the spirit and scope of the present invention. Therefore, to appraise the public of the scope of the present invention, the following claims are made.

## Claims

1. An information processing apparatus for generating a user interface required for a manipulation device to manipulate a device to be manipulated, **characterized by** comprising:
reception means for receiving profile information including property information indicating properties of the manipulation device and user information associated with a user who manipulates the manipulation device;
selection means for selecting a source document from source document holding means, which describes a interaction flow of the device to be manipulated, in accordance with the profile information received by said reception means;
generation means for selecting transformation description components from transformation description component holding means that holds transformation description components used to transform the source document in accordance with the profile information received by said reception means, and generating a transformation description by integrating the selected transformation description components;
transformation means for generating contents of a user interface that implements manipulations of the device to be manipulated by the manipulation device by transforming the source document by the transformation description; and
transmission means for transmitting the contents of the user interface to the manipulation device, and
in that the source document includes a description of abstract UI components which are independent from concrete manipulation components that implement the user interface of the manipulation device, and each transformation description component includes a description that transforms an abstract manipulation component in the source document into a concrete manipulation component of the manipulation device.

2. The apparatus according to claim 1, **characterized in that** the source document, the transformation description components, and the contents of the user interface are described in an XML language.

3. The apparatus according to claim 1, **characterized in that** the transformation description components and the transformation description are described as stylesheets.

4. The apparatus according to claim 1, **characterized in that** the manipulation device is said information processing apparatus.

5. The apparatus according to claim 1, **characterized in that** the manipulation device is independent from the device to be manipulated, and
the manipulation device comprises:
transmission means for transmitting the profile information to said information processing apparatus;
reception means for receiving the contents of the user interface from said information processing apparatus; and
execution means for executing the contents of the user interface.

6. The apparatus according to claim 5, **characterized in that** said transmission means transmits the profile information input to the manipulation device to said information processing apparatus.

7. The apparatus according to claim 5, **characterized in that** said transmission means transmits the profile information, which is generated based on a user's manipulation history on the manipulation device, to said information processing apparatus.

8. The apparatus according to claim 5, **characterized in that** the manipulation device comprises acquisition means for acquiring the profile information corresponding to the user of the manipulation device, and
said transmission means transmits the profile information acquired by said acquisition means to said information processing apparatus.

9. A method of controlling an information processing apparatus for generating a user interface required for a manipulation device to manipulate a device to be manipulated, **characterized by** comprising:
a reception step of receiving profile information including property information indicating properties of the manipulation device and user information associated with a user who manipulates the manipulation device;
a selection step of selecting a source document from a source document group, which is stored in a storage medium and describes a manipulation flow of the device to be manipulated, in accordance with the profile information received in the reception step;
a generation step of selecting transformation description components from a transformation description component group, which is stored in the storage medium and is used to transform the source document in accordance with the profile information received in the reception step, and generating a transformation description by integrating the selected transformation description components;
a transformation step of generating contents of a user interface that implements manipulations of the device to be manipulated by the manipulation device by transforming the source document by the transformation description; and
a transmission step of transmitting the contents of the user interface to the manipulation device, and
in that the source document includes a description of abstract manipulation components which are independent from concrete manipulation components that implement the user interface of the manipulation device, and each transformation description component includes a description that transforms an abstract manipulation component in the source document into a concrete manipulation component of the manipulation device.

10. A program that implements control of an information processing apparatus for generating a user interface required for a manipulation device to manipulate a device to be manipulated, **characterized by** comprising:
a program code of a reception step of receiving profile information including property information indicating properties of the manipulation device and user information associated with a user who manipulates the manipulation device;
a program code of a selection step of selecting a source document from a source document group, which is stored in a storage medium and describes a manipulation flow of the device to be manipulated, in accordance with the profile information received in the reception step;
a program code of a generation step of selecting transformation description components from a transformation description component group, which is stored in the storage medium and is used to transform the source document in accordance with the profile information received in the reception step, and generating a transformation description by integrating the selected transformation description components;
a program code of a transformation step of generating contents of a user interface that implements manipulations of the device to be manipulated by the manipulation device by transforming the source document by the transformation description; and
a program code of a transmission step of transmitting the contents of the user interface to the manipulation device, and
in that the source document includes a description of abstract manipulation components which are independent from concrete manipulation components that implement the user interface of the manipulation device, and each transformation description component includes a description that transforms an abstract manipulation component in the source document into a concrete manipulation component of the manipulation device.
